# EUROPEAN PATENT SPECIFICATION

(11) **EP 2 733 619 B1**
(45) Date of publication and mention of the grant of the patent: **27.09.2017**
(21) Application number: 13150756.8
(22) Date of filing: 10.01.2013
(51) Int. Cl.: G06F 13/38, G06F 1/16, G09G 5/00, H04L 12/803

(54) **Electronic device with Thunderbolt interface, connecting method thereof, and docking apparatus**
Elektronische Vorrichtung mit Thunderbolt-Schnittstelle, Anschlussverfahren dafür und Andockvorrichtung
Dispositif électronique avec interface Thunderbolt, son procédé de raccordement et dispositif d'accueil

(30) Priority: 14.11.2012 TW 101142413
(43) Date of publication of application: 21.05.2014
(73) Proprietor: Acer Incorporated, New Taipei City 221 (TW)
(72) Inventor: Ma, Chin-Shiang, New Taipei City 221 (TW)
(74) Representative: Becker Kurig Straus

(56) References cited:
- WO-A2-2012/151327
- US-A1- 2012 127 651

## Description

### BACKGROUND OF THE INVENTION

### 1. Field of the Invention

The invention generally relates to a peripheral equipment connecting technique, and more particularly, to an electronic device with a ThunderBolt interface, a connecting method thereof.

### 2. Description of Related Art

In order to allow a user to improve the performance of a computer or expand the functionality of the computer, the computer system is usually equipped with general-purpose bus interfaces (for example universal serial bus (USB) interface). The Intel Corporation disclosed a type of digital interfaces for connecting peripheral equipments, and this type of digital interfaces are called the ThunderBolt (previously codenamed Light Peak) interfaces. In the ThunderBolt technology, the PCI-E data transmission technique and the DisplayPort video streaming technique are integrated so that two different types of lanes can coexist in the same cable for respectively transmitting data and video streams. Thus, ThunderBolt interfaces can be used as general-purpose connection interfaces between computers and other peripheral devices. In addition, because the slots adopted by the ThunderBolt technology are the same as mini DisplayPort slots, the ThunderBolt technique also supports DisplayPort interfaces.

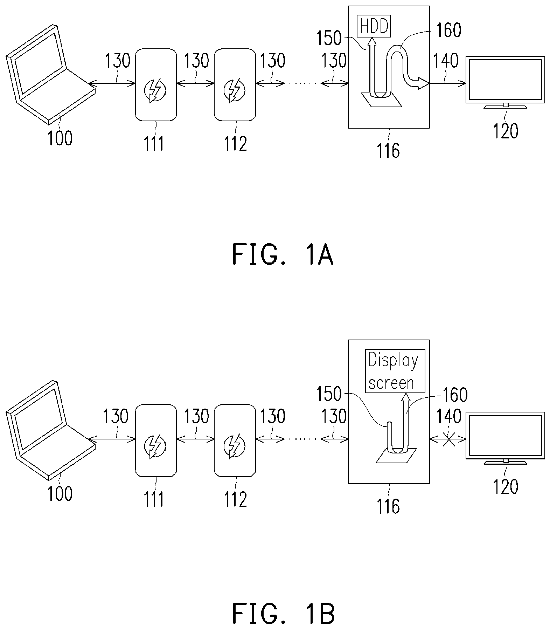

FIG. 1A and FIG. 1B are diagrams of a computer 100 adopting the ThunderBolt technology, peripheral devices 111-116, and a screen device 120 with a DisplayPort interface. The computer 100 adopting the ThunderBolt technology has a single mini DisplayPort interface and is connected with the peripheral device 111 through a ThunderBolt cable 130. Each ThunderBolt cable 130 comes with a ThunderBolt chip for automatically transmitting data and video streams. The peripheral devices 111-116 with ThunderBolt interfaces (simply referred to as ThunderBolt devices 111-116) respectively have two mini DisplayPort interfaces, such that at most six ThunderBolt devices (i.e., the ThunderBolt devices 111-116) can be connected by the ThunderBolt cables 130 in a daisy chain manner without using any hub or switch. The ThunderBolt devices 111-116 may be a data storage device, a network card, and a display screen, etc.

Additionally, it is mentioned in existing data regarding the ThunderBolt technology that when data is transmitted between the computer 100 and the ThunderBolt devices 111-116 through a daisy chain, as shown in FIG. 1A, if the ThunderBolt device 116 itself is not a display screen (for example, the ThunderBolt device 116 is an external hard disk (HDD)), an external display screen 120 with a DisplayPort interface can be further connected to the ThunderBolt device 116. Herein the display screen 120 is connected with the ThunderBolt device 116 through a DisplayPort cable 140. This is because the ThunderBolt device 116 uses only the PCI-E lane 150 for transmitting data and accordingly it can use the DisplayPort lane 160 for transmitting DisplayPort video streams to the display screen 120.

However, as shown in FIG. 1B, if the ThunderBolt device 116 itself is a display screen (i.e., the ThunderBolt device 116 needs to use the DisplayPort lane 160), the ThunderBolt device 116 cannot transmit any DisplayPort video stream to the display screen 120, and accordingly the display screen 120 cannot display any image. Such hardware limitation will bring inconvenience to the user when the user adjusts the connections of the peripheral devices 111-116.

US 2012/127651 A1 discloses a system for securing mobile devices such as laptops, comprising two end members, each with a male electrical connector, that engage opposite sides of mobile device, a crossbeam between the two end members that cradles the underside of the mobile device, and a mechanical linkage that is used to release the mobile device.

WO 2012/151327 A2 discloses a method and apparatus for transporting data through network tunnels. A tunneled device advertises certain capabilities to peer devices of a network, and discovers capabilities of peer devices of the network or each device of a tunneled network derives a network parameter from a transit protocol parameter for use in data networking.

### SUMMARY OF THE INVENTION

The present invention is provided by appended claims 1 and 8. Beneficial embodiments are described in the dependent claims. Accordingly, the invention is directed to an electronic device with a ThunderBolt interface, a connecting method thereof, and a docking apparatus, in which the limitation of the ThunderBolt technology in the hardware structure of the electronic device and the docking apparatus is overcome. Thereby, when the electronic device is a display screen and is at the end of a daisy chain, a display screen with a DisplayPort interface can still be connected with the electronic device, and accordingly, the electronic device and the docking apparatus in the invention can be conveniently used.

The invention provides an electronic device with a ThunderBolt interface. The electronic device includes a first slot, a second slot, a ThunderBolt interface controller, and a DisplayPort splitter. The ThunderBolt interface controller is coupled to the first slot and the second slot. The ThunderBolt interface controller receives a stream to obtain a data stream and a video stream, and determines whether an external device is inserted into the second slot. The DisplayPort splitter is coupled to the ThunderBolt interface controller through a DisplayPort lane. The DisplayPort splitter includes a first transmission path and a second transmission path passing through the second slot. When the ThunderBolt interface controller determines that a transmission type of the external device is a DisplayPort interface and the electronic device needs to use the DisplayPort lane, the DisplayPort splitter parses the video stream to generate a first stream and a second stream and transmits the first stream and the second stream respectively to the electronic device and the external device through the first transmission path and the second transmission path.

The invention provides a connecting method adapted to an electronic device with a ThunderBolt interface. The electronic device includes a first slot and a second slot. The connecting method includes following steps. A ThunderBolt interface stream is received through the first slot. The ThunderBolt interface stream is parsed to obtain a data stream and a video stream. Whether an external device is inserted into the second slot is determined. When a transmission type of the external device is a DisplayPort interface and the electronic device needs to use the DisplayPort lane, the video stream is parsed to generate a first stream and a second stream. The first stream and the second stream are respectively transmitted to the electronic device and the external device through the first transmission path and the second transmission path which passes through the second slot.

The invention provides a docking apparatus. The docking apparatus includes a first slot, a second slot, a third slot, a ThunderBolt interface controller, and a DisplayPort splitter. The ThunderBolt interface controller is coupled to the first slot and the second slot. The ThunderBolt interface controller receives a ThunderBolt interface stream through the first slot, parses the ThunderBolt interface stream to obtain a data stream and a video stream, and determines whether an external device is inserted into the second slot. The DisplayPort splitter is coupled to the ThunderBolt interface controller through a DisplayPort lane. The DisplayPort splitter including a first transmission path passing through the third slot and a second transmission path passing through the second slot. When the ThunderBolt interface controller determines that a transmission type of the external device is a DisplayPort interface and the electronic device inserted into the third slot needs to use the DisplayPort lane, the DisplayPort splitter parses the video stream to generate a first stream and a second stream and transmits the first stream and the second stream respectively to the electronic device and the external device through the first transmission path and the second transmission path.

As described above, in an electronic device with a ThunderBolt interface and a docking apparatus provided by embodiments of the invention, a DisplayPort splitter is disposed at a DisplayPort lane of a ThunderBolt interface controller. When the electronic device needs to use the DisplayPort lane for displaying images, the DisplayPort splitter separates a DisplayPort video stream of the electronic device and an inserted external device into two identical or different video streams, so that the limitation of the ThunderBolt technology on the hardware structure of the electronic device is overcome. Thereby, when the electronic device is a display screen and is at the end of a daisy chain, a display screen with a DisplayPort interface can still be connected. Thus, using the electronic device is made very convenient. In addition, the docking apparatus detects whether an inserted electronic device needs to use a DisplayPort lane and achieves the effect described above by using a DisplayPort splitter. Thus, an electronic device with a ThunderBolt interface is not limited by the original specifications of the ThunderBolt interface and can be plugged to the docking apparatus flexibly.

These and other exemplary embodiments, features, aspects, and advantages of the invention will be described and become more apparent from the detailed description of exemplary embodiments when read in conjunction with accompanying drawings.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1A and FIG. 1B are diagrams of a computer adopting the ThunderBolt technology, peripheral devices, and a screen device with a DisplayPort interface.
FIG. 2 is a diagram of an electronic device with a ThunderBolt interface according to a first embodiment of the invention.
FIG. 3 is a functional block diagram of a DisplayPort splitter in FIG. 2.
FIG. 4 is a flowchart of a connecting method adapted to an electronic device with a ThunderBolt interface according to the first embodiment of the invention.
FIG. 5 is a diagram of a docking apparatus according to a second embodiment of the invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

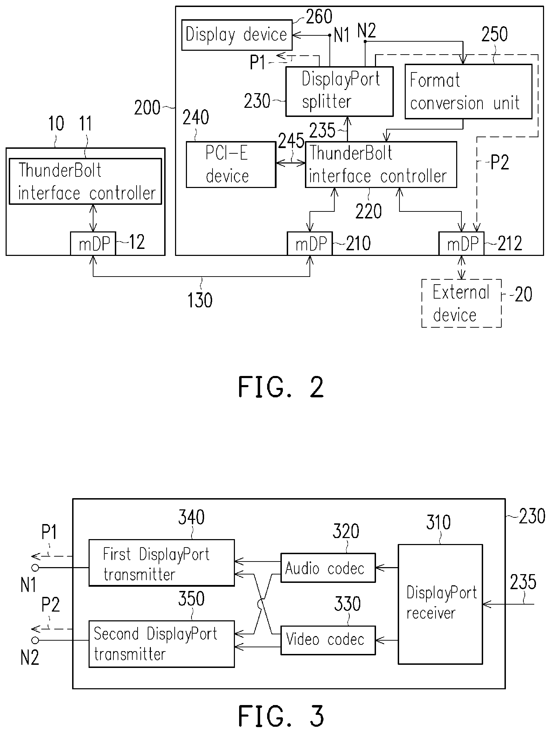

FIG. 2 is a diagram of an electronic device 200 with a ThunderBolt interface according to a first embodiment of the invention. Referring to FIG. 2, the electronic device 200 includes a first slot 210, a second slot 212, a ThunderBolt interface controller 220, and a DisplayPort splitter 230. The ThunderBolt interface controller 220 is coupled to the first slot 210 and the second slot 212. The ThunderBolt interface controller 220 receives a ThunderBolt interface stream conforming to a ThunderBolt protocol from another electronic device 10 with a ThunderBolt interface through the first slot 210. The electronic device 10 may be the computer system 100 or one of the ThunderBolt devices 111-116 illustrated in FIG. 1A and FIG. 1B. The electronic device 10 transmits the ThunderBolt interface stream to the electronic device 200 through a ThunderBolt interface controller 11, a mini DisplayPort (mDP) slot 12 conforming to the ThunderBolt interface, and the ThunderBolt cable 130. Based on the ThunderBolt technology, the first slot 210 and the second slot 212 conforming to the ThunderBolt interface are both mini DisplayPort slots. Thus, besides the ThunderBolt cable 130 in FIG. 1, a DisplayPort cable 140 can also be inserted into the first slot 210 and the second slot 212.

The electronic device 200 may be a display screen with a ThunderBolt interface. Thus, the electronic device 200 may further include a format conversion unit 250 and a display device 260. The format conversion unit 250 may be a converter for converting a DisplayPort interface into a high definition multimedia interface (HDMI). The display device 260 receives a DisplayPort video stream from a first output terminal N1 of the DisplayPort splitter 230 and displays the DisplayPort video stream. In some embodiments, the electronic device 200 further includes a PCI-E device 240. The PCI-E device 240 is coupled to the ThunderBolt interface controller 220 through a data lane 245. The PCI-E device 240 receives a PCI-E data stream in the ThunderBolt interface stream through the data lane 245 and processes the PCI-E data stream. The PCI-E device 240 is a peripheral equipment which needs not to use the DisplayPort lane 235, such as a storage hard disk, a network card, a display card, or an audio card. The electronic device 200 is not limited by foregoing description, and which may also be a peripheral device with a display function or a peripheral device using the DisplayPort video stream in the ThunderBolt interface stream. In some other embodiments, the electronic device 200 in the invention may come without the display function (i.e., the display device 260).

The DisplayPort splitter 230 is coupled to the ThunderBolt interface controller 220 through the DisplayPort lane 235, and the PCI-E device 240 is coupled to the ThunderBolt interface controller 220 through the data lane 245 (for example, a PCI-E data stream lane). The ThunderBolt interface controller 220 is coupled to the first slot 210, the second slot 212, the DisplayPort splitter 230, the PCI-E device 240, and an output terminal of the format conversion unit 250. The ThunderBolt interface controller 220 receives a ThunderBolt interface stream from the electronic device 10 through the first slot 210, parses the ThunderBolt interface stream to obtain a data stream to be received by the electronic device 200 and conforming to the PCI-E format and a video stream conforming to the DisplayPort interface, and respectively transmits the data stream and the video stream to the PCI-E device 240 and the DisplayPort splitter 230 through the data lane 245 and the DisplayPort lane 235 to be respectively processed. Namely, the DisplayPort lane 235 is used for transmitting parsed video streams that conform to the DisplayPort interface. In addition, the ThunderBolt interface controller 220 determines whether an external device 200 is inserted into the second slot 212. If the external device 200 is inserted into the second slot 212, the ThunderBolt interface controller 220 further determines whether the external device 200 transmits information by using a ThunderBolt interface or a DisplayPort interface, so as to determine the operation of the DisplayPort splitter 230.

The two output terminals N1 and N2 of the DisplayPort splitter 230 are respectively connected to a first transmission path P1 and a second transmission path P2 passing through the second slot 212. The first transmission path P1 is a transmission path for the electronic device 200 to receive a DisplayPort video stream from the DisplayPort splitter 230 by using the DisplayPort lane 235 when the electronic device 200 has the display device 260. The second transmission path P2 is a transmission path for the DisplayPort splitter 230 to transmit a DisplayPort video stream to an external device 20 through the image format conversion of the format conversion unit 250, the ThunderBolt interface controller 220, and the second slot 212 when the external device 20 is inserted into the second slot 212 and the transmission type of the external device 20 is a DisplayPort interface. In other words, when the DisplayPort splitter 230 transmits the DisplayPort video stream to the external device 20 through the second transmission path P2, the DisplayPort video stream is first converted by the format conversion unit 250 into a video stream in the HDMI format and then transmitted by the ThunderBolt interface controller 220 to the external device 20 through the second slot 212.

Because of the hardware design in the ThunderBolt technology, the output control of the ThunderBolt interface controller 220 in the DisplayPort lane 235 is done by a DisplayPort de-multiplexer (DEMUX). The DisplayPort de-multiplexer can select one of the first transmission path P1 and the second transmission path P2 for transmitting the DisplayPort video stream. The DisplayPort de-multiplexer does not parse a video stream in the DisplayPort lane 235, duplicates the video stream to the two transmission paths P1 and P2, or splits the video stream. Thus, in the electronic device 200 provided by the invention, the DisplayPort splitter 230 which is capable of parsing the DisplayPort video streams is adopted to overcome the shortcoming in the hardware design, so that the electronic device 200 with a ThunderBolt interface can overcome the original limitation of the ThunderBolt technology and support the external device 20 conforming to the DisplayPort interface. Generally speaking, the external device 20 conforming to the DisplayPort interface is usually a display screen, a display, or a related equipment.

To be specific, when the ThunderBolt interface controller 220 determines that the external device 20 is already inserted into the second slot 212, the transmission type of the external device 20 is a passive data transmission DisplayPort interface, and the display device 260 in the electronic device 200 needs to use the DisplayPort lane 235 for receiving a DisplayPort video stream, the ThunderBolt interface controller 220 controls the DisplayPort splitter 230 to parse the DisplayPort video stream to generate a first DisplayPort video stream to be displayed in the display device 260 and a second DisplayPort video stream to be displayed in the external device 20, so as to split the DisplayPort video stream. The DisplayPort splitter 230 respectively transmits the first DisplayPort video stream and the second DisplayPort video stream to the display device 260 in the electronic device and the external device 20 in the second slot 212 through the first transmission path P1 and the second transmission path P2.

On the other hand, when the ThunderBolt interface controller 220 determines that the transmission type of the inserted external device 20 is a DisplayPort interface but the electronic device 200 itself does not need the DisplayPort lane 235 (i.e., the electronic device 200 does not use or stops using the display device 260), the ThunderBolt interface controller 220 controls the DisplayPort splitter 230 to skip the split of the DisplayPort video stream and directly transmit the DisplayPort video stream to the external device 20 through the second transmission path P2. Moreover, when the ThunderBolt interface controller 220 determines that the transmission type of the external device 20 is a ThunderBolt interface, the ThunderBolt interface controller 220 determines whether to transmit the ThunderBolt interface stream to the external device 20 according to whether the number of serially connected ThunderBolt devices exceeds its upper limit (for example, 6).

In embodiments of the invention, the DisplayPort splitter 230 in the electronic device 200 may also generate a first stream and a second stream by duplicating a DisplayPort video stream (i.e., data of the first stream and the second stream is identical to that of the DisplayPort video stream) and transmit the identical first stream and second stream to the display device 260 of the electronic device 200 and the external device 20, so that the two display screens display the same video stream at the same time.

FIG. 3 is a functional block diagram of the DisplayPort splitter 230 in FIG. 2. Referring to FIG. 3, the DisplayPort splitter 230 includes a DisplayPort receiver (RX) 310, an audio codec 320, a video codec 330, a first DisplayPort transmitter (TX) 340, and a second DisplayPort transmitter (TX) 350. The DisplayPort receiver 310 receives a DisplayPort video stream through the DisplayPort lane 235. The audio codec 320 and the video codec 330 receive the DisplayPort video stream and respectively process an audio portion and a video portion of the DisplayPort video stream. After that, the audio codec 320 and the video codec 330 are controlled by the ThunderBolt interface controller 220. When the ThunderBolt interface controller 220 in FIG. 2 determines that the transmission type of the inserted external device 20 is a DisplayPort interface but the electronic device 200 itself does not need the DisplayPort lane 235, the ThunderBolt interface controller 220 controls the audio codec 320 and the video codec 330 to generate the first stream for the display device 260 in FIG. 2 and the second stream for the external device 20 in FIG. 2 according to information in the DisplayPort video stream.

The first DisplayPort transmitter 340 and the second DisplayPort transmitter 350 are also controlled by the ThunderBolt interface controller 220. After the first stream and the second stream are generated, the first DisplayPort transmitter 340 transmits the first stream to the first output terminal N1 and the first transmission path P1, and the second DisplayPort transmitter 350 transmits the second stream to the second output terminal N2 and the second transmission path P2. On the other hand, when the ThunderBolt interface controller 220 in FIG. 2 determines that the transmission type of the inserted external device 20 is a DisplayPort interface but the electronic device 200 does not need the DisplayPort lane 235, the ThunderBolt interface controller 220 controls the second DisplayPort transmitter 350 to directly transmit the DisplayPort video stream to the external device 20 through the second transmission path P2.

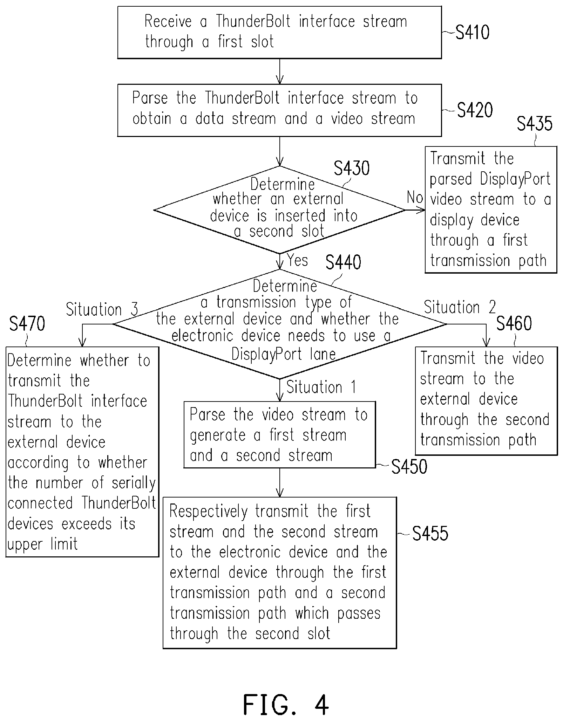

As described above, the invention also provides a connecting method adapted to the electronic device 200 with a ThunderBolt interface. The connecting method is adapted to the electronic device 200 illustrated in FIG. 2. The electronic device 200 includes a first slot 210 and a second slot 212. FIG. 4 is a flowchart of a connecting method adapted to an electronic device with a ThunderBolt interface according to the first embodiment of the invention. Referring to both FIG. 2 and FIG. 4, in step S410, the ThunderBolt interface controller 220 receives a ThunderBolt interface stream conforming to a ThunderBolt protocol through the first slot 210. In step S420, the ThunderBolt interface controller 220 parses the ThunderBolt interface stream to obtain a data stream and a video stream belonging to the electronic device 200. In step S430, the ThunderBolt interface controller 220 determines whether an external device 20 is inserted into the second slot 212.

If the external device 20 is not inserted into the second slot 212, step S435 is executed after step S430, in which the ThunderBolt interface controller 220 controls the DisplayPort splitter 230 to transmit the parsed DisplayPort video stream to the display device 260 through the first transmission path P1. If the external device 20 is inserted into the second slot 212, step S440 is executed after step S430, in which the ThunderBolt interface controller 220 determines the transmission type of the external device 20 and whether the electronic device 200 needs to use the DisplayPort lane and performs different operation according to the actual situation.

If the ThunderBolt interface controller 220 determines that the transmission type of the external device 20 is a DisplayPort interface and the electronic device 200 needs to use the DisplayPort lane 235 (situation 1), step S450 is executed after step S440, in which the ThunderBolt interface controller 220 controls the DisplayPort splitter 230 to parse the video stream, so as to generate a first stream and a second stream. After that, in step S455, the DisplayPort splitter 230 respectively transmits the first stream and the second stream to the electronic device 200 and the external device 20 through the first transmission path P1 and the second transmission path P2 which passes through the second slot 212. Thus, the display device 260 in the electronic device 200 and the external device 20 can display the first DisplayPort video stream and the second DisplayPort video stream at the same time.

If the ThunderBolt interface controller 220 determines in step S440 that the transmission type of the external device 20 is a DisplayPort interface and the electronic device 200 does not need the DisplayPort lane 235 (situation 2), step S460 is executed after step S440, in which the ThunderBolt interface controller 220 controls the DisplayPort splitter 230 to directly transmit the video stream to the external device 20 through the second transmission path P2. Herein the DisplayPort splitter 230 does not split the video stream.

If the ThunderBolt interface controller 220 determines in step S440 that the transmission type of the external device 20 is a ThunderBolt interface (situation 3), the ThunderBolt interface controller 220 determines whether to transmit the ThunderBolt interface stream to the external device 20 according to whether the number of serially connected ThunderBolt devices exceeds its upper limit (for example, 6). The related hardware structure and operation thereof in the present embodiment can be referred to embodiments described above therefore will not be described herein.

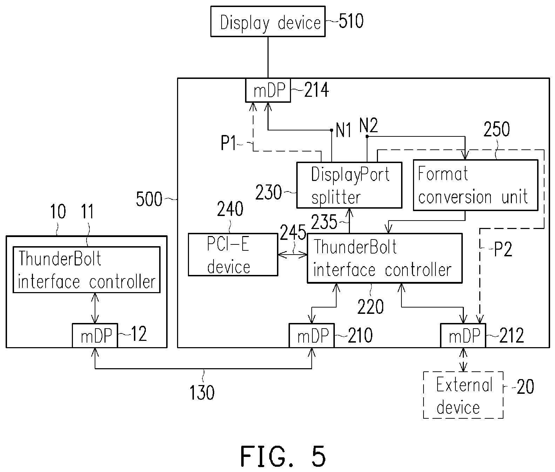

Besides an electronic device with a ThunderBolt interface, the invention may also be applied to a docking apparatus served as a hub or an interface converter with a ThunderBolt interface. FIG. 5 is a diagram of a docking apparatus 500 according to a second embodiment of the invention. As shown in FIG. 5, the major difference between the docking apparatus 500 and the electronic device 200 in FIG. 2 is that the electronic device 200 comes with a built-in display device 260, while the docking apparatus 500 in FIG. 5 is connected with an electronic device 510 through a third slot 214, so as to achieve the same technical effect and purpose as those described in foregoing embodiments.

To be specific, the docking apparatus 500 includes a first slot 210, a second slot 212, a third slot 214, a ThunderBolt interface controller 220, and a DisplayPort splitter 230. The first slot 210, the second slot 212, and the third slot 214 are all mini DisplayPort slots. The ThunderBolt interface controller 220 is coupled to the first slot 210 and the second slot 212. The ThunderBolt interface controller 220 receives a ThunderBolt interface stream through the first slot 210, parses the ThunderBolt interface stream to obtain a data stream and a video stream respectively for the electronic device 510 and the external device 20, and determines whether an external device 20 is inserted into the second slot 212.

The DisplayPort splitter 230 is coupled to the ThunderBolt interface controller 220 through the DisplayPort lane 235. The DisplayPort splitter 230 includes a first transmission path P1 passing through the third slot 214 and a second transmission path P2 passing through the second slot 212. When the ThunderBolt interface controller 220 determines that the external device 20 is inserted into the second slot 212, the transmission type of the external device 20 is a DisplayPort interface, and the electronic device 510 inserted into the third slot 214 needs to use the DisplayPort lane 235, the DisplayPort splitter 230 parses the video stream to generate a first stream and a second stream and respectively transmits the first stream and the second stream to the electronic device 510 and the external device 20 through the first transmission path P1 and the second transmission path P2.

As described above, in an electronic device with a ThunderBolt interface and a docking apparatus provided by embodiments of the invention, a DisplayPort splitter is disposed at a DisplayPort lane of a ThunderBolt interface controller. When the electronic device needs to use the DisplayPort lane for displaying images, the DisplayPort splitter separates a DisplayPort video stream of the electronic device and an inserted external device into two identical or different video streams, so that the limitation of the ThunderBolt technology on the hardware structure of the electronic device is overcome and when the electronic device is a display screen and is at the end of a daisy chain, a display screen with a DisplayPort interface can still be connected. Thus, using the electronic device is made very convenient. In addition, the docking apparatus detects whether an inserted electronic device needs to use a DisplayPort lane and achieves the effect described above by using a DisplayPort splitter. Thus, an electronic device with a ThunderBolt interface is not limited by the original specifications of the ThunderBolt interface and can be plugged to the docking apparatus flexibly.

## Claims

1. An electronic device (200) with a ThunderBolt interface, comprising:
a first slot (210) and a second slot (212); the electronic device being **characterized by** further comprising:
a ThunderBolt interface controller (220), coupled to the first slot (210) and the second slot (212), adapted to receive a ThunderBolt interface stream through the first slot (210), to parse the ThunderBolt interface stream to obtain a data stream and a video stream, and to determine whether an external device (20) is inserted into the second slot (212); and
a DisplayPort (DP) splitter (230), coupled to the ThunderBolt interface controller (220) through a DisplayPort lane (235), and comprising a first transmission path (P1) and a second transmission path (P2) passing through the second slot (212),
wherein when the ThunderBolt interface controller (220) determines that a transmission type of the external device (20) is a DisplayPort interface and the electronic device (200) needs to use the DisplayPort lane (235), the DisplayPort splitter (230) is adapted to parse the video stream to generate a first stream and a second stream and to transmit the first stream and the second stream respectively to the electronic device (200) and the external device (20) through the first transmission path (P1) and the second transmission path (P2).

2. The electronic device according to claim 1, wherein when the ThunderBolt interface controller (220) determines that the transmission type of the external device (20) is a DisplayPort interface and the electronic device (200) needs not to use the DisplayPort lane (235), the DisplayPort splitter (230) is adapted to transmit the video stream to the external device (20) through the second transmission path (P2).

3. The electronic device according to claim 1, wherein the DisplayPort splitter (230) is adapted to generate the first stream and the second stream by duplicating the video stream and to transmit the identical first stream and second stream to the electronic device (200) and the external device (20).

4. The electronic device according to claim 1, wherein the electronic device (200) is a display screen with a ThunderBolt interface.

5. The electronic device according to claim 1 further comprising:
a PCI-E device (240), coupled to the ThunderBolt interface controller (220) through a data lane (245), and adapted to receive the data stream through the data lane (245).

6. The electronic device according to claim 1, wherein the DisplayPort splitter (230) comprises:
a DisplayPort receiver (310), adapted to receive the video stream through the DisplayPort lane (235);
an audio codec (320) and a video codec (330), adapted to receive the video stream, respectively processing an audio portion and a video portion of the video stream, and to generate the first stream and the second stream according to the video stream;
a first DisplayPort transmitter (340), adapted to transmit the first stream to the first transmission path (P1); and
a second DisplayPort transmitter (350), adapted to transmit the second stream to the second transmission path (P2).

7. The electronic device according to claim 1, wherein the electronic device (200) is connected with a docking apparatus (500) through a third slot (214).

8. A connecting method of an electronic device (200) with a ThunderBolt interface, wherein the electronic device (200) comprises a first slot (210) and a second slot (212), the connecting method comprising:
receiving a ThunderBolt interface stream through the first slot (210); the method being **characterized in** further comprising:
parsing the ThunderBolt interface stream to obtain a data stream and a video stream;
determining whether an external device (20) is inserted into the second slot (212);
when a transmission type of the external device (20) is a DisplayPort interface and the electronic device (200) needs to use the DisplayPort lane (235), parsing the video stream to generate a first stream and a second stream; and
respectively transmitting the first stream and the second stream to the electronic device (200) and the external device (20) through a first transmission path (P1) and a second transmission path (P2) passing through the second slot (212).

9. The connecting method according to claim 8, further comprising:
when a ThunderBolt interface controller (220) determines that the transmission type of the external device (20) is a DisplayPort interface and the electronic device (200) needs not to use the DisplayPort lane (235), transmitting the video stream to the external device (20) through the second transmission path (P2).

10. The connecting method according to claim 8, wherein the step of generating the first stream and the second stream further comprises:
generating the first stream and the second stream by duplicating the video stream, and transmitting the identical first stream and second stream to the electronic device (200) and the external device (20).

## Patentansprüche

1. Elektronische Vorrichtung (200) mit einer ThunderBolt-Schnittstelle, umfassend:
einen ersten Steckplatz (210) und einen zweiten Steckplatz (212); wobei die elektronische Vorrichtung **dadurch gekennzeichnet ist, dass** sie weiterhin umfasst:
einen ThunderBolt-Schnittstellencontroller (220), der mit dem ersten Steckplatz (210) und dem zweiten Steckplatz (212) gekoppelt ist, der angepasst ist, um einen ThunderBolt-Schnittstellen-Stream durch den ersten Steckplatz zu empfangen, um den ThunderBolt-Schnittstellen-Stream zu parsen, um einen Daten-Stream und einen Video-Stream zu erhalten, und um zu bestimmen, ob eine externe Vorrichtung (20) in den zweiten Steckplatz (212) eingesteckt ist; und
einen DisplayPort(DP)-Splitter (230), der mit dem ThunderBolt-Schnittstellencontroller (220) durch eine DisplayPort-Spur (235) gekoppelt ist, und umfassend einen ersten Übertragungspfad (P1) und einen zweiten Übertragungspfad (P2), durch den zweiten Steckplatz (212) verlaufend,
wobei, wenn der ThunderBolt-Schnittstellencontroller (220) bestimmt, dass ein Übertragungstyp der externen Vorrichtung (20) eine DisplayPort-Schnittstelle ist und die elektronische Vorrichtung (200) die DisplayPort-Spur (235) nutzen muss, der DisplayPort-Splitter (230) angepasst ist, um den Video-Stream zu parsen, um einen ersten Stream und einen zweiten Stream zu erzeugen und um den ersten Stream und den zweiten Stream jeweils an die elektronische Vorrichtung (200) und die externe Vorrichtung (20) zu übertragen, durch den ersten Übertragungspfad (P1) und den zweiten Übertragungspfad (P2).

2. Elektronische Vorrichtung gemäß Anspruch 1, wobei, wenn der ThunderBolt-Schnittstellencontroller (220) bestimmt, dass der Übertragungstyp der externen Vorrichtung (20) eine DisplayPort-Schnittstelle ist und die elektronische Vorrichtung (200) die DisplayPort-Spur (235) nicht nutzen muss, der DisplayPort-Splitter (230) angepasst ist, um den Video-Stream durch den zweiten Übertragungspfad (P2) an die externe Vorrichtung (20) zu übertragen.

3. Elektronische Vorrichtung gemäß Anspruch 1, wobei der DisplayPort-Splitter (230) angepasst ist, um den ersten Stream und den zweiten Stream durch Duplizieren des Video-Streams zu erzeugen und um den identischen ersten Stream und zweiten Stream an die elektronische Vorrichtung (200) und die externe Vorrichtung (20) zu übertragen.

4. Elektronische Vorrichtung gemäß Anspruch 1, wobei die elektronische Vorrichtung (200) ein Bildschirm mit einer ThunderBolt-Schnittstelle ist.

5. Elektronische Vorrichtung gemäß Anspruch 1, weiterhin umfassend:
eine PCI-E-Vorrichtung (240), die mit dem ThunderBolt-Schnittstellencontroller (220) durch eine Datenspur (245) gekoppelt ist, und die angepasst ist, um den Daten-Stream durch die Datenspur (245) zu empfangen.

6. Elektronische Vorrichtung gemäß Anspruch 1, wobei der DisplayPort-Splitter (230) umfasst:
einen DisplayPort-Empfänger (310), der angepasst ist, um den Video-Stream durch die DisplayPort-Spur (235) zu empfangen;
einen Audio-Codec (320) und einen Video-Codec (330), angepasst, um den Video-Stream zu empfangen, jeweils einen Audio-Anteil und einen Video-Anteil des Video-Streams zu verarbeiten und den ersten Stream und den zweiten Stream gemäß dem Video-Stream zu erzeugen;
einen ersten DisplayPort-Transmitter (340), der angepasst ist, um den ersten Stream an den ersten Übertragungspfad (P1) zu übertragen; und
einen zweiten DisplayPort-Transmitter (350), der angepasst ist, um den zweiten Stream an den zweiten Übertragungspfad (P2) zu übertragen.

7. Elektronische Vorrichtung gemäß Anspruch 1, wobei die elektronische Vorrichtung (200) durch einen dritten Steckplatz (214) mit einem Docking-Gerät (500) verbunden ist.

8. Verbindungsverfahren eines elektronischen Geräts (200) mit einer ThunderBolt-Schnittstelle, wobei das elektronische Gerät (200) einen ersten Steckplatz (210) und einen zweiten Steckplatz (212) umfasst, wobei das Verbindungsverfahren umfasst:
Empfangen eines ThunderBolt-Schnittstellen-Streams durch den ersten Steckplatz (210); wobei das Verfahren **dadurch gekennzeichnet ist, dass** weiterhin umfasst:
Parsen des ThunderBolt-Schnittstellen-Streams, um einen Daten-Stream und einen Video-Stream zu erhalten,
Bestimmen, ob eine externe Vorrichtung (20) in den zweiten Steckplatz (212) eingesteckt ist;
wenn ein Übertragungstyp der externen Vorrichtung (20) eine DisplayPort-Schnittstelle ist und die elektronische Vorrichtung (200) die DisplayPort-Spur (235) nutzen muss, Parsen des Video-Streams, um einen ersten Stream und einen zweiten Stream zu erzeugen; und
jeweils Übertragen des ersten Streams und des zweiten Streams an die elektronische Vorrichtung (200) und die externe Vorrichtung (20), durch einen ersten Übertragungspfad (P1) und einen zweiten Übertragungspfad (P2), durch den zweiten Steckplatz (212) verlaufend.

9. Verbindungsverfahren gemäß Anspruch 8, weiterhin umfassend:
wenn ein ThunderBolt-Schnittstellencontroller (220) bestimmt, dass der Übertragungstyp der externen Vorrichtung (20) eine DisplayPort-Schnittstelle ist und die elektronische Vorrichtung (200) die DisplayPort-Spur (235) nicht nutzen muss, Übertragen des Video-Streams durch den zweiten Übertragungspfad (P2) an die externe Vorrichtung (20).

10. Verbindungsverfahren gemäß Anspruch 8, wobei der Schritt des Erzeugens des ersten Streams und des zweiten Streams weiterhin umfasst:
Erzeugen des ersten Streams und des zweiten Streams durch Duplizieren des Video-Streams und Übertragen des identischen ersten Streams und zweiten Streams an die elektronische Vorrichtung (200) und die externe Vorrichtung (20).

## Revendications

1. Dispositif électronique (200) avec une interface ThunderBolt, comprenant :
une première fente (210) et une deuxième fente (212) ; le dispositif électronique étant **caractérisé en ce qu'**il comprend en outre :
un dispositif de commande d'interface ThunderBolt (220) accouplé à la première fente (210) et à la deuxième fente (212), adapté pour recevoir un flux d'interface ThunderBolt par la première fente (210), pour analyser le flux d'interface ThunderBolt afin d'obtenir un flux de données et un flux vidéo, et pour déterminer si un dispositif externe (20) est inséré dans la deuxième fente (212) ; et
un répartiteur (230) de DisplayPort (DP) accouplé au dispositif de commande d'interface ThunderBolt (220) par le biais d'une piste de DisplayPort (235), et comprenant un premier chemin de transmission (P1) et un deuxième chemin de transmission (P2) traversant la deuxième fente (212),
dans lequel, lorsque le dispositif de commande d'interface ThunderBolt (220) détermine qu'un type de transmission du dispositif externe (20) est une interface de DisplayPort et que le dispositif électronique (200) a besoin d'utiliser la piste de DisplayPort (235), le répartiteur de DisplayPort (230) est adapté pour analyser le flux vidéo afin de générer un premier flux et un deuxième flux et pour transmettre le premier flux et le deuxième flux respectivement au dispositif électronique (200) et au dispositif externe (20) par le biais du premier chemin de transmission (P1) et du deuxième chemin de transmission (P2).

2. Dispositif électronique selon la revendication 1, dans lequel, lorsque le dispositif de commande d'interface ThunderBolt- (220) détermine que le type de transmission du dispositif externe (20) est une interface DisplayPort et que le dispositif électronique (200) n'a pas besoin d'utiliser la piste de DisplayPort (235), le répartiteur de DisplayPort (230) est adapté pour transmettre le flux vidéo au dispositif externe (20) par le biais du deuxième chemin de transmission (P2).

3. Dispositif électronique selon la revendication 1, dans lequel le répartiteur de DisplayPort (230) est adapté pour générer le premier flux et le deuxième flux en copiant le flux vidéo et pour transmettre le premier flux et le deuxième flux identiques au dispositif électronique (200) et au dispositif externe (20).

4. Dispositif électronique selon la revendication 1, dans lequel le dispositif électronique (200) est un écran d'affichage avec une interface ThunderBolt.

5. Dispositif électronique selon la revendication 1, comprenant en outre :
un dispositif PCI-E (240) accouplé au dispositif de commande d'interface ThunderBolt (220) par le biais d'une piste de données (245) et adapté pour recevoir le flux de données par le biais de la piste de données (245).

6. Dispositif électronique selon la revendication 1, dans lequel le répartiteur de DisplayPort (230) comprend :
un récepteur de DisplayPort (310) adapté pour recevoir le flux vidéo par le biais de la piste de DisplayPort (235) ;
un codec audio (320) et un codec vidéo (330) adaptés pour recevoir le flux vidéo, traitant respectivement une partie audio et une partie vidéo du flux vidéo, et pour générer le premier flux et le deuxième flux en fonction du flux vidéo ;
un premier transmetteur de DisplayPort (340) adapté pour transmettre le premier flux au premier chemin de transmission (P1) ; et
un deuxième transmetteur de DisplayPort (350) adapté pour transmettre le deuxième flux au deuxième chemin de transmission (P2).

7. Dispositif électronique selon la revendication 1, dans lequel le dispositif électronique (200) est raccordé à un appareil de connexion (500) par le biais d'une troisième fente (214).

8. Procédé de connexion d'un dispositif électronique (200) à une interface ThunderBolt, dans lequel le dispositif électronique (200) comprend une première fente (210) et une deuxième fente (212), le procédé de connexion comprenant :
la réception d'un flux d'interface ThunderBolt par la première fente (210) ; le procédé étant **caractérisé en ce qu'**il comprend en outre :
l'analyse du flux d'interface ThunderBolt afin d'obtenir un flux de données et un flux vidéo ;
la détermination de l'insertion d'un dispositif externe (20) dans la deuxième fente (212) ;
l'analyse du flux vidéo pour générer un premier flux et un deuxième flux lorsqu'un type de transmission du dispositif externe (20) est une interface DisplayPort et que le dispositif électronique (200) a besoin d'utiliser la piste de DisplayPort (235) ; et
la transmission du premier flux et du deuxième flux respectivement au dispositif électronique (200) et au dispositif externe (20) par le biais d'un premier chemin de transmission (P1) et d'un deuxième chemin de transmission (P2) passant à travers la deuxième fente (212) .

9. Procédé de connexion selon la revendication 8, comprenant en outre :
la transmission du flux vidéo au dispositif externe (20) par le biais du deuxième chemin de transmission (P2) lorsqu'un dispositif de commande d'interface ThunderBolt (220) détermine que le type de transmission du dispositif externe (20) est une interface DisplayPort et que le dispositif électronique (200) n'a pas besoin d'utiliser la piste de DisplayPort (235).

10. Procédé de connexion selon la revendication 8, dans lequel l'étape de génération du premier flux et du deuxième flux comprend en outre :
la génération du premier flux et du deuxième flux par la copie du flux vidéo, et la transmission du premier flux et du deuxième flux identiques au dispositif électronique (200) et au dispositif externe (20).
